# EUROPEAN PATENT SPECIFICATION

(11) **EP 3 532 739 B1**
(45) Date of publication and mention of the grant of the patent: **17.01.2024**
(21) Application number: 17811671.1
(22) Date of filing: 30.10.2017
(51) Int. Cl.: F16B 25/00, F16B 37/00

(54) **IMPROVEMENTS IN OR RELATING TO SCREWBOLTS**
VERBESSERUNGEN AN ODER IM ZUSAMMENHANG MIT SCHRAUBENBOLZEN
AMÉLIORATIONS APPORTÉES OU RELATIVES À DES BOULONS À VIS

(30) Priority: 28.10.2016 GB 201618301; 05.04.2017 GB 201705538
(43) Date of publication of application: 04.09.2019
(73) Proprietor: Excalibur Screwbolts Limited, Hockley SS5 5JU (GB)
(72) Inventor: BICKFORD, Charles, Hockley Essex SS5 5JU (GB)
(74) Representative: Humphrey-Evans, Edward John
(86) International application number: PCT/GB2017/000159
(87) International publication number: WO 2018/078311

(56) References cited:
- GB-A- 2 290 593
- US-A1- 2013 223 954
- US-B2- 8 636 456

## Description

### Field of the Invention

The present invention relates to fasteners such as screwbolts in general and to anti-shake screwthreaded systems and anti-shake screwthreaded assemblies employing screwbolts in particular.

### Background to the Invention

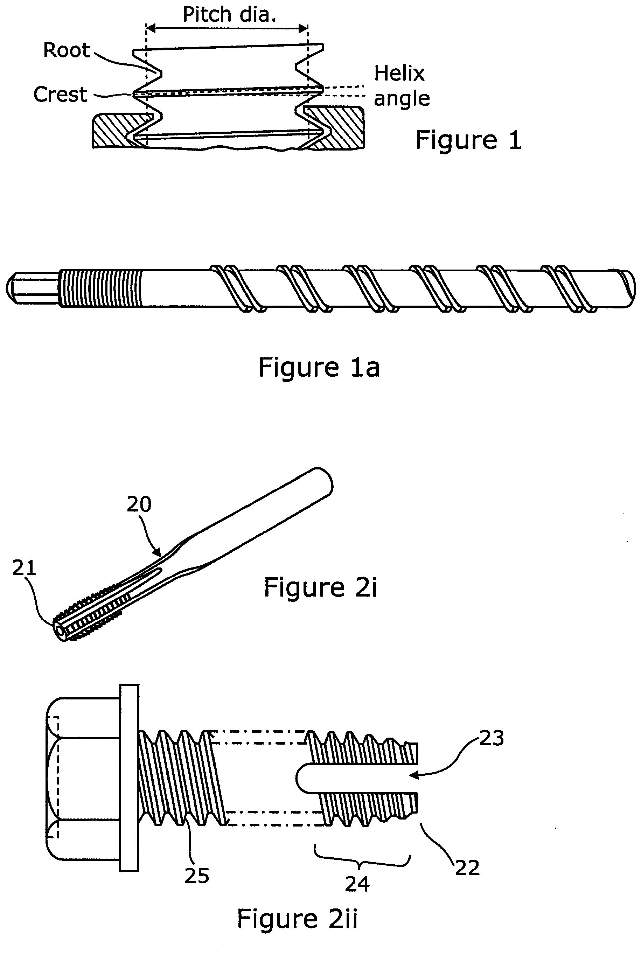

As is universally known, in relation to screws and threaded fasteners, a thread comprise a continuous helical ridge formed on the inside (nut) or outside (screw) of a cylinder. With reference to Figure 1, this ridge is called the crest. Between each crest is a space, called the root. Threads are set at an angle to the axis of the bolt or nut. This slope is called the helix angle, which is typically in the range 10° - 80°. The angle must be sloped, either upward to the right (for right-hand threaded screws) or upward to the left (for left-hand threaded screws). The thread forms a "V" shape at the root between crests. The angle of this "V" is called the thread angle, and is determined by fastener engineers. Most screw threads used on machines for fastening components say, for example on a bicycle, use a 60-degree thread angle.

A general distinction between a screw and a bolt is that a bolt enters a substrate from a first side, passes through the substrate and takes a nut on an opposite side, whereas a screw takes no nut because it threads directly into the substrate i.e. a bolt bolts several things together whilst a screw screws into something. In contrast, a screwbolt is a single fixing for the majority of construction materials that is typically easy to install and has high pull out and shear values. Helix angles of a typical screwbolt are generally of the order of 25° - 80°, although more often in the range 45° - 70°, whilst the helix angle of a standard machine bolt is of the order 25° or less.

In order to create a thread on an inside surface of a nut or other apertured material substrate, it is common to employ a tap, as is shown in Figure 2. As is known, when cutting new threads in a blank hole, the hole size must be appropriate for the tap - and this is called the "tap drill size". In use, a tap is rotated as it cuts into and removes a certain amount of material, leaving an internal thread. Generally speaking, engineers have found that if the size of hole corresponds with the tap size, then the hole would be considered as being too small, the tap will have difficulty removing material, and a great deal of force in turning the tap will be required. Furthermore in general machining terms, the tap will tend to bind in the hole, with no room for the cut material to disperse - which is why taps tend to have three or more cutting lands with spaces therebetween. In the example of Figure 2i, the tap 20 has five lands 21. If the hole is too large, the tap will cut with little problem, but the internal thread will not be the correct size for the bolt/screw, and failure during tightening or use is very likely. In Figure 2ii a thread swaging bolt per US3492908 is shown, where the bolt has a tapered distal end 22 provided with flutes 23, the flutes extending into an adjacent portion of major diameter of the bolt, whereby to define a tap-thread section 24. The proximal end of the bolt is provided with a thread 25 of said major diameter in correspondence with the tap. Upon first use of the bolt within a non-threaded hole, the tap-thread section 23 operably defines a corresponding screwthread, to enable fastening and subsequent unfastening of the bolt and similar threaded bolts.

An issue of concern for all types of screw fasteners is that if they rotate relative to a fastened item, they diminish the degree of fastening. Many methods of preventing a relative rotation between bolt and nut have been devised. For example, there are many types of lock washers that are passed between an axial face of a screw-fastening nut and a substrate nut that are used to resist loosening of bolted joints. There are essentially two types: spring action and tooth. Spring action lock washers include a split helical spring, which when placed between a nut or screw head and substrate, compress as the fastener is tightened and the spring-back tension deters loosening. Further, because of their spring-like take-up action, split lock washers can compensate for slight material wear. However, because spring type washers flatten when tightened, their "locking" action doesn't come into play until the fastener has slightly loosened. Tooth lock washers-internal, external, internal-external and countersunk external-create a ratchet action by biting into the nut or screw head and the surface it contacts. Despite their widespread usage, tooth lock washers can scratch mating surfaces. Further, such tooth lock washers can become flattened in use, becoming useless as a means to prevent unwanted unfastening.

Other methods of preventing relative rotation employ drilled holes passing through a bolt whereby, together with the use of a castellated nut, a lock-wire, split pin or "R-clip" can be passed; nylon inserts are sometimes employed, for example in the case of the so-called "Nyloc"^{®} nuts, although these provide a defined frictional resistance to rotation rather than preventing rotation per se as disclosed in GB228505 to T Rennerfelt. Whilst such techniques are commonplace and in widespread use for normal machine bolts, screwbolts tend not to benefit from such techniques, in part due to their greater helix angles. Threaded fasteners (nuts and bolts) are used to fasten innumerable items to other items in manufacturing, and in daily life. As a fastener is tightened, the fastener actually flexes and stretches, much like a rubber band. This stretching is not permanent, but it gives the joint force to hold together, called "preload," or tension. Each fastener is designed for a certain range of tension. Too much tightening will deform the threads or the parts. Too little preload will mean the fastener will loosen with use. US8636456 (NUCOR CORP) discloses building structure components assembled with little or no welding required at the construction site. That is to say it corresponds to a structure that is fastened by means of corresponding nut and bolts, wherein the bolts are self drilling and self threading.

Tension in the fastener depends largely upon the amount of torque applied in tightening of the fastener and the size of the thread. Generally, engineers will specify a thread size large enough to handle the anticipated stresses. The amount of pressure applied by a thread can be substantial in order to hold an associated joint secure. Whilst a common cause for threaded fasteners loosening is simply a lack of tension applied during initial assembly, generally speaking vibration, stress, use, or abuse cannot typically overcome the amount of clamping force in a properly sized and secured threaded fastener. As a simple rule of thumb, any fastener should be tightened as tight as possible without failure of the thread or the component parts. This means the weakest part of the joint determines the limits of tension, and hence, torque. Notwithstanding this, in many mechanical systems, stresses and strains placed upon a fastener, through movement or otherwise in operation, ultimately realize in a loosening of a fastener. For example, an M8 bolt having a pitch of 1.25, when manufactured to British Standard BS3692 will have a proof load of 21.2KN and withstand a torque of 22.8Nm whilst an M30 bolt will have corresponding values of 336KN and withstand a torque of 1356Nm. Proof load represents the usable strength range and is the maximum stress (load tension) that a metal can resist without permanently deforming (as in elongating). Technical data in respect of nut and bolt combinations can be obtained from suppliers of bolts such as Pockside Export Limited, for example.

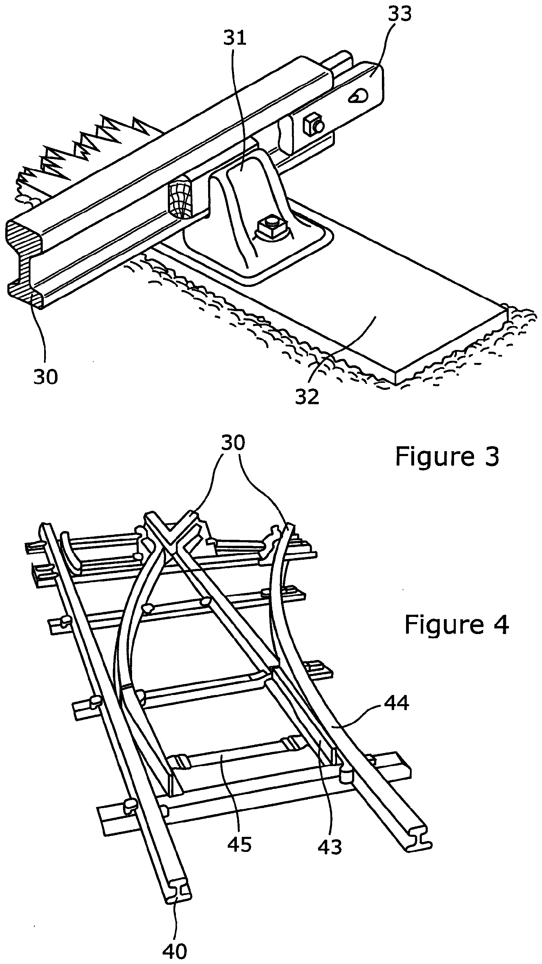

An example shall now be considered with reference to Figure 3, where there is shown an end portion of a rail (track) 30 for a railway, the rail being positioned upon a chair 31 which, in turn, rests upon a sleeper 32, which is set in ballast. In non-welded track assemblies, fishplates are employed to connect the ends of adjacent track length so as to provide an effective continuous length of track. A fishplate 33 is shown with a fishbolt extending therethrough. In a further example, with reference to Figure 4, there is railway junction (points) or railroad switch being a mechanical installation enabling railway trains to be guided from one track to another, such as at a railway junction, where a spur track or siding track 30 branches off a main line 40. The junction consists of a pair of linked tapering rails, known as points 43 (also referred to as switch rails or point blades), lying between the diverging outer rails 44 (the stock rails). These points can be moved laterally into one of two positions at a switch point 45, the switch rails being connected by a tie bar 45 to ensure that each switch rail of a pair is positioned correctly.

It will be appreciated that considerable lateral forces are generated in use in the above examples. Not only do the rails need to be secured in a correct lateral position, but vertical flexing occurs due to the passage of trains together with their loads of many tonnes, the points equipment must also flex in unison, noting that the switch mechanism may be operated remotely using an electric motor or a hand-operated lever or from a nearby ground frame. Given that the fishplates, points etc. described above are fastened with ordinary fasteners, together with anti-shake washers, railway engineers are required to regularly inspect railways in view of normal issues such as movement of ballast and wear through passage of trains. In particular the bolts for fastening the track and the points are checked to ensure that they are correctly fastened tightened - after any necessary realignment - since the screwbolts tend to become unfastened. It will be appreciated that this can be expensive. Constructional fasteners are employed in a myriad of situations in buildings, scaffolding and in road networks which, when subjected to vibratory and or lateral forces arising from lift mechanisms, windage, irregular movement of vehicles on bridges, flyovers etc., will also tend to become unfastened.

### Object to the Invention

The present invention seeks to provide an improved screwbolt system for use in engineering and construction. The present invention also seeks to provide a screwbolt for use as a fastener in harsh conditions of load and have a reduced tendency to unfasten. The present invention also seeks to provide a method of installing such screwbolts.

### Statement of Invention

In accordance with a first aspect of the present invention, there is provided a screwthreaded fastening arrangement per claim 1. It has been found that the application of torque in rotating a first metallic fastening component of a first hardness relative to a second metallic fastening of a second hardness must be maintained to ensure that the frictional forces induce frictional welding between the surfaces such that upon ceasing relative movement, the first and second parts become welded with respect to their mutual engaging contact surfaces.

The shank component is provided with the helix and has the greater surface hardening, the inside diameter of the nut component is conveniently in the range of 100% - 110% the diameter of the shank, with the diameter of the thread necessarily being greater than the inside diameter of the nut component and the diameter of the shank portion. Conveniently, the thread is raised from a working surface in the range of 0.5 - 10% of the diameter when arranged upon the shank or an inside surface of the nut component. Conveniently the length of the nut comprises at least at least one turn of the helix thread, preferably at least one and a half turns and further preferably at least two turns of the helix thread. The helix angle is the angle of a screw flight (leading edge of the land of a screwthread) relative to a plane containing the screwthread axis.

The helix may be cut either right hand or left hand, although the helix angle is not commonly altered from what is typically a standard square pitch, such a change can have a significant impact on processing. Traditionally, it has been believed that a maximum efficiency of a screwthread can be achieved when the helix angle lies between 40° and 45°, although a reasonable efficiency can be achieved above 15°. In screws especially, the helix angle is useful in determining the amount of torque to be applied in power screw applications, although the present invention differs in that the actions of the screwthread are not merely to pass through previously created thread, but can also enable an initial engagement of the formed screwthread.

The hardness of the inside surface of the nut component is conveniently in the range of 10 - 200 HB and the hardness of the threaded helix being in the range 200 - 1000HB or more when the nut component is received in a substantially blank form. The hardness of the threaded helix when comprising part of an inside surface of the nut component is conveniently in the range of 200 - 1000HB and the hardness of the shank in which it defines a fastening thread is conveniently in the range 10 - 200 HB, whereby the harder surface can engage with the less hard surface material.

The component having the screwthread is the generally circularly cylindrical shank component. In such a situation, the nut component can comprise a simple tubular item with at least two flat surfaces (flats) upon an external surface defined parallel to an axis of the tubular item. Conveniently, there are four or six flats arranged in a generally square or a regular hexagonal arrangement; the flats are preferably heat treated or otherwise to improve their hardness. Conveniently the nuts are provided with a lead-in taper. It has been found that the taper can assist in the starting of a thread and, inter alia, assist in maintaining the two parts in a correct coaxial orientation. Alternatively or additionally, the lead-in section of the nut is provided with a lead-in threaded section. By providing either or both of these two features, the nuts will provide an easier fit, but for a lighter duty of use, for a given length of nut.

The screwthread can comprise a pair of parallel spaced apart helical ridges, in tests, it has been shown that parallel spaced apart threads more readily provide a vibration-proof fixing, it is believed that this is due to the simplicity of the frictional welding process involved. Heat generated by the frictional welding process is generated at the contact areas - direct heat input occurs at the weld interfaces and is confined in a small volume. Other types of threads can be provided, for example, a triple thread; optionally with first and third threads being of a reduced height, although the heat generated during rotation is spread over a wider volume, meaning that greater rotational speeds need to be achieved, with an ensuing benefit that, per unit length of, a greater degree of heating is achieved, complementing the cold welding process, inter alia assisting by reducing friction, to a degree, noting that anti-friction coatings can be employed, especially where it is not desired that a nut to attach to a portion of shank.

In an example not covered by the claims, the component provided with the formed threaded section is the nut; this has the advantage that only nuts need to be heat treated and tapped, as opposed to the shank item. In such a case, the inside diameter of the threaded section must be less than the diameter of the shank component. Rebar (short for reinforcing bar) comprising unfinished tempered steel rods can be employed for shank material in accordance with the invention, given that it is both widely available and relatively inexpensive, whereby the whole fixing arrangement can be made available at little expense. The nut having a hardened screwthread cutting section could be defined within a part of a structure; a simply formed re-bar or similar could be introduced into the nut section; further components could be attached to the arrangement by means of further, separate nut components.

Applicants have determined that an improved vibration-proof fastening can be provided by the use of a screwbolt in conjunction with a fastening means comprising a simply apertured member - i.e. without any internal thread - with a relatively low hardness, in common with that of a mild steel, for example. Whilst the Brinell hardness (HB) of a heat-treated screwbolt can be of the order of 200 - 1000 HB (or more), the Brinell hardness of mild steel is 120 HB. Given the relative positions of the types of steel, significant Galvanic issues will not arise. Notwithstanding this, other materials could be used, which may prove more economically viable in certain instances. For example, the hardness of hardened AW-6060 Aluminium is 75 HB and 18-8 (304) annealed stainless steel is 200 HB. In contrast, the hardness of untreated (pure) metals such as aluminium and copper respectively have hardness values of 15 HB and 35 HB.

It will be appreciated that in the use of a threaded screwbolt, a galling occurrence about a threaded section may not be required - for example the threaded section is too long, in which case, a lubricious coating of the substrate engagement thread can be applied. For example, a dry film lubricant, such as one of a fluoropolymer coating; a fluoropolymer coating within a polymer matrix and a molybdenum disulphide coating could be applied, which agents are readily available. The dry film coating can be applied directly to the anchor bolt. The dry film coating can be applied upon one or more base coats, which base coats are applied to the anchorbolt. The lubricious coating can have a thickness in the range of 1 - 25 microns. Conveniently, the dry film lubricant has a friction coefficient from 0.2 - 0.01.

Whilst the screwbolt can be removed by the use of a suitable tool with respect to the drive head portion, which is conveniently of a hexagonal or square cross-section. As will be realised, the component with the greater hardness can be re-used several times, although the re-use of an internally threaded fastening means is not recommended given that the thread formed upon initial use will be complementary to a screwbolt of first use. Notwithstanding this, the harder material component should be inspected to ensure that damage has not occurred to its integrity. In tests, in the use of an M20 screwbolt, having a twin helix threaded shank, axial forces (tensile loads) of up to 25 tonnes have been achieved.

In accordance with a second general aspect of the present invention, there is provided a method of providing a screwthreaded fastening in accordance with claim 11, to permit fixing of the joint by welding, whereby to provide a fixing resistant to disengagement by vibration.

The present invention has applications across a range of construction sectors outside the rail industry, including repair work, especially in communication networks such as vehicular highways and tunnelling. By providing a fastening system with a substantially improved resistance to loosening over time by virtue of vibration, and other factors, expensive inspection procedures can be reduced in number. The present invention can provide a secure substrate anchoring can provide an increased efficiency and improved costs on many major engineering and construction products around the world.

### Brief Description of the Figures

For a better understanding of the present invention, reference will now be made, by way of example only, to the Figures as shown in the accompanying drawing sheets, wherein:-
Figure 1 illustrates a portion of a screwthread from one side;
Figure 1a illustrates a known screwbolt;
Figure 2 shows a drill tap;
Figure 3 shows a fishplate join in a rail track;
Figure 4 shows a set of points for a railway junction;
Figure 5 shows a first view of the present invention in part side /part cross-section;
Figure 6i & 6ii show side and perspective view form a distal of a fastener in accordance with the present invention;
Figure 7i & 7ii show perspective view and plan views of a nut fastener in accordance with the present invention;
Figures 8i - 8iii show features of a first alternative nut section; and,
Figures 9i - 9iii show features of a second alternative nut section
Figures 10i - 10iii show features of a third alternative nut section.

### Detailed description of the Preferred Embodiments

There will now be described, by way of example only, the best mode contemplated by the inventor for carrying out the present invention. In the following description, numerous specific details are set out in order to provide a complete understanding to the present invention. It will be apparent to those skilled in the art, that the present invention may be put into practice with variations of the specific.

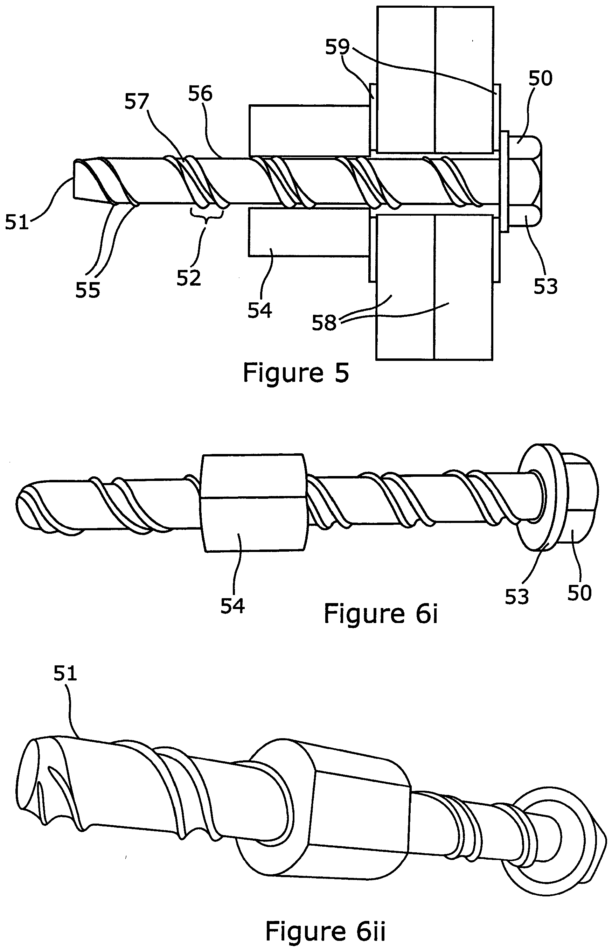

Referring now to Figure 5, an example of a fastener shall be detailed in accordance with a first aspect of the invention, comprising a metallic screwbolt 50 comprising a shank 51 with a twin helix screwthread 52 defined thereon, a flanged head 53 and a metallic securement nut 54, which screwbolt in the form of the blank is of a right circular cylindrical form. The screwthread 52 comprises a ridge-groove-ridge twin helix configuration that extends helically along the shank 51 and comprises a pair of parallel opposed ridges 55 upstanding from an adjacent land 56, with a groove 57 defined therebetween. Two substrates 58 are fastened together - with washers 59 at either side thereof. In this instance the ridges of the screwthread 52 of the shank member are hardened and which ridges extend typically in the range of 0.5 - 3 mm, more typically in the range 0.8 - 1.6mm above the diameter of the shank, which for this M10 bolt would be situated between the screwbolt head and the securement nut (ideally employing one or more washers to, inter alia, spread the load when securely abutting to opposite sides of the connected substrates). In this embodiment, the threaded shank member is an M10 bolt, meaning that the diameter of the shank is 9.7 - 9.9mm - i.e. has a nominal diameter not exceeding 10mm, the screw pitch being of the order of twice the diameter, the major diameter of the helices being in the range of 10 - 15% of the diameter of the shank and the spacing between the helices is of the order of 4 - 6mm, with a well-depth of 1-2mm, being approximately 105 of the diameter of the shank. The internal diameter of the nut is 10.5mm meaning that the hardened ridges will cut into the softer material of the inside surface of the nut. It will be appreciated that the lead-in thread at the distal end of the bolt must be sharp. It will also be appreciated that the outer surface of the nut can be heat treated whereby to enable purchase by wrenches and the like without significant rounding. Washers 59 are often used with threaded fastener. The use of a washer distributes stresses that arise around a bolted joint. Additionally, the washer reduces friction as the bolt turns. Generally, it is best to have at least one washer under the turning part of the fastener, either the nut or the head. These bolts are commonly available in shank diameter sizes of 6, 8, 10, 12, 16 & 20mm, but other sizes can be made for particular applications.

It is believed that the components are substantially affixed to one another by means of friction welding where large turning forces applied with respect to one component relative to the other component cause significant pressures of the parts to act mutually against each other raising temperature. It is believed that by reason of such heat being generated at the weld interface a small heataffected zone is created, which in turn leads to a fast joining time (of the order of a few seconds) noting that in the process of tightening one component with respect to another, the movement must be continuous and, it has been found that electrically powered / compressed air power tools (e.g. the so-called nutrunner) are conveniently employed whereby to provide constant / reactively increasing levels of torque, given that the use of hand operated spanners etcetera will generally provide discontinuous action as the hand wrench etcetera is operated in a to and fro operation, even if a ratchet mechanism is employed. Friction welding techniques benefit from the welds generally being melt-free, which mitigates grain growth in engineered materials, such as high-strength heat-treated steels, as is the case with the hardened thread helices. Another advantage is that the motion tends to "clean" the surface between the materials being welded, which means they can be joined with less preparation, with the debris being removed from contact surfaces. During such a welding process, depending on the method being used, small pieces of dirt will be forced out of the working mass (flash). It will also be appreciated that there are many variables that can be utilised in a custom product. For example, the relative hardness of the two metals can be adjusted; the softer that the soft material is, then the easier that it can be to screw the harder material into the softer surface; the length of the nut can be adjusted such that between one and two helical terms can be retained within the distance of the nut, with similar results being obtainable. A still further benefit of friction welding is that it is possible to weld two metals with wide differences in melting points of the two materials - which may well have prevented such materials from being welded together with known welding techniques. Indeed, friction welding can provide a "full strength" bond with no additional weight. Common uses for these sorts of bi-metal joins has arisen with regard to cryogenic systems e.g. MRI imaging equipment, where copper-steel joints are common in the reactor cooling systems, and in the transport of cryogenic fluids, where friction welding has been used to join aluminium alloys to stainless steels and high-nickel-alloy materials for cryogenicfluid piping and containment vessels. The gap between the shank and the aperture defined by the nut has been found to operate well in the range of 0.2 - 0.5mm, with larger gaps being required for screwbolts with higher ridge members.

Referring now to Figure 6i and 6ii, an example of a fastener shall be detailed, comprising a screwbolt 50 having a shank 51 with a screwthread 52 defined thereon, a flanged head 53 and a securement nut 54, which screwbolt in the form of the blank is of a right circular cylindrical form. In this embodiment, the threaded shank member is an M10 bolt, whilst the securement nut comprises a simple body having two flats defined thereon for engagement with a wrench. Following attachment, applying a suitable degree of torque, taking into account size of fastener and relative hardness of the components, the fastening nut 54 became fixed in position due, it is believed at least in part, to a friction welding action and, where the hardness of one material permits, to a degree of galling. The axial dimension of the land 56 is at least 50% of the blank diameter with the result that relatively large amounts of substrate material are disposed between the ridge-groove-ridge configuration when the fixing device is in place. The nut - having two flats 59 has an internal diameter in of 9.7mm. Prior to attachment, the nut has no particular thread design defined on an inside surface thereof; conveniently, it can be uniformly circularly cylindrical. The material surrounding the hole defined within the nut has a hardness in the range of 1 - 200 HB, compared to a hardness of the thread being typically 200 - 1000HB.

Applicant has performed a number of tests using their Hexagon Screwbolt (HSB) bolts together with nuts fabricated from EN8M (080M40), an unalloyed medium carbon steel. The screwbolts are fabricated from boron 920 steel. Boron steels are medium carbon steels with added boron and are easily hardened and such boron steels can be hardened to a degree of hardness equal to higher carbon steels and more expensive low alloy steels, and distort to a minimal degree after heat treatment. An HSB 08/100 screwbolt was fastened to a nut with an 8mm diameter (i.e. corresponding to the diameter of the shank), and had a length of 20mm with no thread defined therein, although a ~30° lead-in flange angle was provided. Light oil was employed as a lubricant to ease penetration of the upstanding twin-thread the initial cut and using a tool commonly referred to as a "nut-spinner" or similar. The twin thread helices upstand from the shank by typically by 0.5 - 1.2 mm, with a well between each pair of helices having similar dimensions. The nut was found to lock after a reduction of torque. Using limited testing equipment, a maximum torque of 128Nm was applied to the bolt and failure of the fastening did not occur. For comparison purposes, the properties of an 8mm ISO grade 10.9 (alloy steel, quenched and tempered -ISO, per Rockside Export limited) was provided with a torque limit of 32.8Nm. Using an HSB 10/100 screwbolt, fastened to a nut with a 10mm diameter (i.e. corresponding to the diameter of the shank), a maximum torque of 128Nm was applied to the bolt and failure of the fastening did not occur. Again, for comparison purposes, the properties of a 10mm ISO grade 10.9 material was provided with a torque limit of 65.5Nm. Similar values achieved using basic equipment and an HSB 12/100 fastened to a similarly blank nut enabled a 305Nm level of torque to be recorded. Once again, for comparison purposes, the properties of a 12 mm ISO grade 10.9 material was provided with a torque limit of 112.7Nm. The steel employed for the bolt was Boron Steel BS3111/9/2.1.A, having a mechanical zinc finish, being case hardened and having a Brinell hardness of 200, not including the helices which are hardened within the range 600 - 1000. It will be apparent that the invention can be applied to a wide variety of metallic fastening materials.

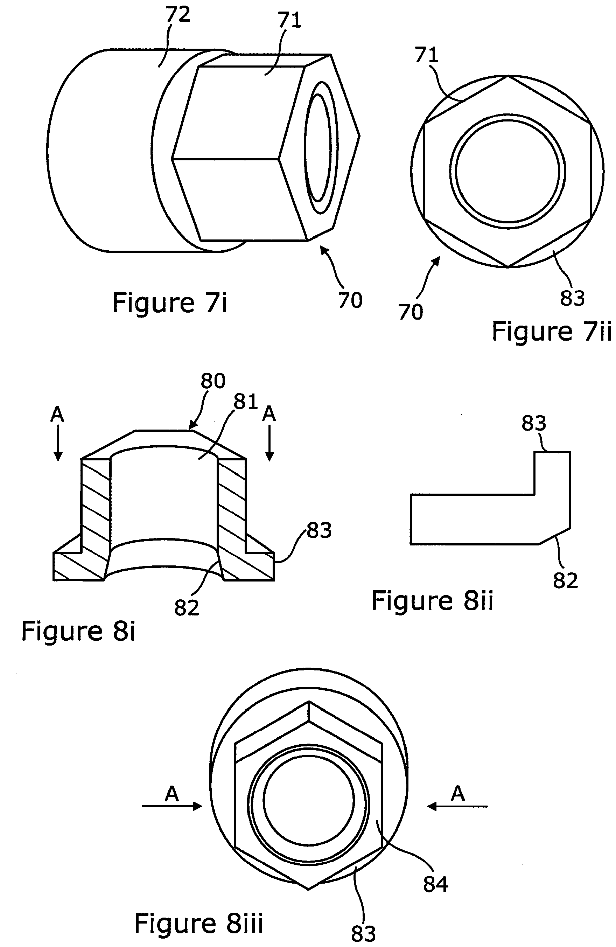

Figures 7i and 7ii show a second type of nut 70 to be employed with a screwbolt; the nut comprises a first hexagonal section 71, whereby standard wrenches, ratchet drivers and the like permit engagement with the nut 70. The second section comprises a circularly cylindrical element 72, which when rotated and supported by hand can be more easily handled, whereby to assist in control during a fastening process. The increased axial length provides a distance sufficient to enable a sufficient portion of thread to engage with a screwbolt, noting that a screwbolt pitch can be 2cm or greater and the axial length of the nut must be at least equivalent to a pitch of the thread; preferably one and half times the pitch of the thread and more preferably twice the pitch.

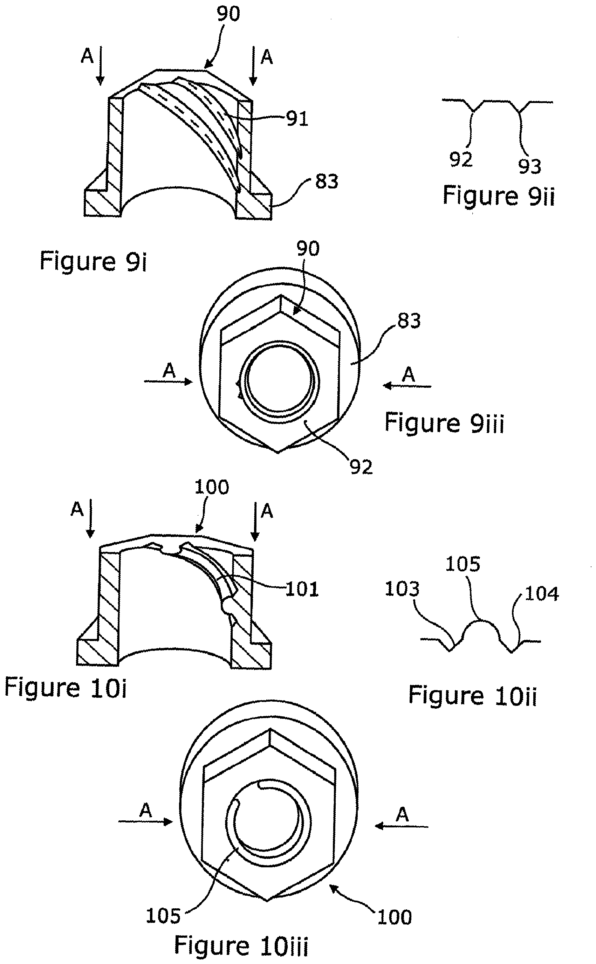

Figures 8i shows a first alternative style of nut 80 in perspective sectional view wherein the tubular inside bore 81 of the nut has a lead-in /chamfered section 82, the view being a section on A - A per Figure 8iii, which shows the nut from an off-axis perspective view, with a regular six-sided hexagonal head 84 having a flared section 83 operable to spread forces onto a part to be fastened when in use. Figure 8ii shows the profile of an inside wall section of the bolt 80, indicating the lead in 82 relative to an otherwise plain bore 81. The nuts are "soft" to allow the screwbolt with which the nut will cooperate with to cut its own thread. Figure 9i shows a second alternative style of nut 90 in perspective view wherein the tubular inside 91 of the nut has no lead-in section, but instead has a lead-in thread section comprising two grooves 92, 93 the perspective view being a section on A - A per Figure 9iii, again in an off-axis perspective view, which shows the nut, with a regular six-sided hexagonal head having a flared section 83 operable to spread forces onto a part to be fastened when in use. Figure 9ii shows the profile of an inside wall section of the bolt 90, indicating the lead in screwthread 92, 93 relative to an otherwise plain bore 91. Again, the nut is "soft" to allow the screwbolt with which the nut will cooperate with to cut its own thread. Figure 10i shows a second alternative style of nut 100 in perspective view wherein the tubular inside 101 of the nut has an alternative lead-in thread section comprising two female channels 103, 104 having a male helix 105 therebetween, the perspective view being a section on A - A per Figure 10iii, again in an off-axis perspective view, with the nut being a regular six-sided hexagonal head. Figure 10ii shows the profile of an inside wall section 101 of the bolt 100, indicating the lead in screwthread 103, 105, 104 as described above. This enhanced screwthread lead-in is believed to enable a torque load to be accepted without stripping and thereby facilitate use with screwbolts as shown in figures 6i, 6ii above.

Screwbolts as made by the Applicant Company are made of hardened steel; in particular, the helices are hardened beyond the standard Brinell hardness of approx. 200 up to 1000, preferably 600 - 1000, more preferably 700 - 900, to enable the screwbolts to have a self-cutting capability when used in, for example, a concrete bore, dimensioned to enable passage thereof upon driving by the use of a wrench or power tool driving the head or stud in the case of a stud-bolt which may have a drive head that has engagement features which do not extend beyond the diameter of the shank, two distinct types of thread may be applied upon the shank for engagement with distinct coupling nuts, as indicated in Figure 1a.

Modern and traditional construction fastening bolts are made from a variety of steels which are manufactured to increase strength. Conveniently, extreme endurance fastening bolts are manufactured with boron steel, which are cold forged, thread rolled and then subjected to a heat treatment and yellow passivation. Tempering, following oil or water quenching after forming, toughens boron steels. The addition of only 0.001-0.003% soluble boron to a suitably protected base steel can produce an increased hardenability compared to that obtained by additions of about 0.5% manganese, chromium or molybdenum, but with little effect on the as-rolled, normalised or annealed strength.

An improved vibration-proof fastening in accordance with the invention can be provided by the use of a screwbolt in conjunction with a fastening means comprising a simply apertured member - i.e. without any internal thread - with a relatively low hardness, in common with that of a mild steel, for example. Equally, the nut may be provided with a hardened inside face for forming a die, which material, with a hardness of 800-1000 HB can then work around a untreated steel rod, such as re-bar, conveniently made of a general uniform cross section, having a hardness of 120HB. Whilst specific values have been provided, it will be appreciated that a wide variation of values can be used in practice. Whilst the Brinell hardness (HB) of a heat-treated screwbolt is of the order of 800 - 1000 HB (or more), the Brinell hardness of mild steel is 120 HB, hardened AW-6060 Aluminium is 75 HB 18-8 (304) annealed stainless steel is 200 HB. Untreated / unalloyed (pure) metals such as Aluminium and Copper have hardness values of 15 HB and 35 HB.

Variations on the number of helices is possible; the Applicant Company has developed screwbolts with distinct arrangements of helices with respect to their number, relative spacing and relative height, which provide distinct benefits when used with particular material combinations. In the test examples, it is believed that the provision of the well between the helix threads enables any material displaced by the hardened helices to be retained, without preventing premature binding of the movement between the parts. Conveniently, a distal, entry end of the shank element is of a reduced diameter and is configured so as to provide a self-tapping capability, when the shank supports a threaded ridge element, the height of the ridges can be conveniently increased from zero to full height over the first full turn. In use, the fixing device is introduced into an apertured bore in a substrate such as a fishplate by turning so as to form a thread on the interior walls of the bore.

Generally speaking, the helix angle of the helical threads will be in a range from 20° to 80°. The shank component of the screwthreaded fastening of the invention has threads which have a helix angle of from 30° to 75°. The physical dimensions as between parts can also be permitted to vary; for example, the inside diameter of a nut component need not correspond generally to a shank diameter, but the helix diameter will matter more, with regard to an ease of fastening and to the ultimate loads that can be applied.

In addition to the material characteristics that are take into account to enable a screwbolt to be manufactured such that it has, inter alia, sufficient tensile strength, a lubricious coating to assist the two components to initially move - given that the benefit of such coatings diminish under heat. Nonetheless, inventors have determined that a range of dry film lubricants can be selected; preferred dry film lubricants can have provide resistance to abrasion prior to cutting the thread in the desired fastened position. Friction results from two surfaces sliding across each other and friction is quantified as a dimensionless number that describes the reduction of drag (force) between the sliding parts, whereas release is the property of a surface which results in an inability of substances to adhere to it and is a function of surface energy.

In the event that the shank element is provided with a thread, the screwbolt can be formed by thread rolling with a helical bore wall engagement configuration by a thread rolling apparatus, as is known. A thread-rolling station comprises a fixed die and a displaceable die; the two dies are spaced apart by a gap therebetween being equal to the core diameter of the product being rolled. The displaceable die is displaceable in reciprocating fashion. In use, a blank is inserted between the fixed and moving dies by manual or mechanical means as is known in the thread-rolling art. The reciprocating action of the moving dye then carries the blank between them, during this time, the blank is plastically deformed to the face of the dyes as the blank rolls along the faces thereof. This gives rise to formation of the helical bore engagement configuration: die grooves give rise to ridges in the anchorbolt and die ridges give rise to grooves in the anchorbolt.

Whilst it is believed that for steel-steel metallic components, friction welds will result as a primary fastening force, galling will also occur to a degree. Galling is most commonly found in metal surfaces that are in sliding contact with each other. It is especially common where there is inadequate lubrication between the surfaces. However, certain metals will generally be more prone to galling, due to the atomic structure of their crystals. For example, aluminium is a metal that will gall very easily, whereas annealed (softened) steel is slightly more resistant to galling and fully hardened steel is very resistant to galling. Accordingly the issue of galling is unlikely to play a considerable part in the creation of a fastening with hardened steels, this further metal-metal surface reaction will play a part where appropriate material and surface conditions exist. Whilst such characteristics have hitherto been viewed as a problem, the present invention when dissimilar materials such as steel and aluminium are employed can benefit from the creation of a fixing member that seeks to benefit from this characteristic arising when two metal components bear against each other.

The skilled man will realise that the inventive concept of the present invention can have far reaching consequences; by friction welding similar and dissimilar metals together further benefits can be realised. By the creation of a weld about a screw fastening, the vibration proof aspect is substantial for many applications. For example, for example with electrical connections where materials of the same type of different types, the joints can be fully electrically conductive with respect to each other.

## Claims

1. A screwthreaded fastening arrangement, the arrangement comprising a generally circularly cylindrical shank component (50) having a first surface hardness and a nut component (54) having a generally circularly cylindrical aperture with an inside surface with a second hardness, wherein an outside diameter of the shank corresponds with an inside diameter of the nut component; wherein the shank component is provided with a screwthread (52) having a helix angle in the range of 30° - 75°, the screwthread having a surface hardness greater than the surface hardness of the nut component, the screwthread extending outwardly with respect to the land surface (56) of the shank component about a continuous helix (55); wherein the screwthread is operable to engage with the surface of the nut component, and wherein, upon relative rotational movement and axial advancement therebetween, is operable to cut a corresponding thread therein; **characterized in that** the screwthread comprises one of: a pair of parallel spaced apart helical ridges or three parallel spaced apart helical ridges and **in that**, in use, upon cessation of rotational advancement, a state of fixation by welding is induced as between the screwthread and the corresponding cut thread, whereby to resist disengagement by vibration.

2. A screwthreaded fastening arrangement according to claim 1, wherein the inside diameter of the nut component (54) is in the range of 110% - 100% the diameter of the shank (56), with the diameter of the thread being greater than the inside diameter of the nut component.

3. A screwthreaded fastening arrangement according to claim 1 or 2, wherein the thread is raised from a working surface (56) in the range of 0.5 - 10% of the diameter of the land of the shank.

4. A screwthreaded fastening arrangement according to any one of claims 1 - 3, wherein the length of the nut (54) comprises at least one turn of the helix thread.

5. A screwthreaded fastening arrangement according to any one of claims 1 - 3, wherein the length of the nut (54) comprises at least two turns of the helix thread.

6. A screwthreaded fastening arrangement according to any one of claims 1 - 5, wherein the length of the nut (54) is substantially plain yet comprises a threaded lead-in portion comprising at least a one quarter turn of the helix thread.

7. A screwthreaded fastening arrangement according to any one of claims 1 - 5, wherein the inside wall of the nut (54) is substantially parallel yet comprises a threaded lead-in portion comprising at least a one quarter turn of the helix thread.

8. A screwthreaded fastening arrangement according to any one of claims 1 - 7, wherein the hardness of the inside surface of the nut component (54) is in the range of 10 - 200 HB and the hardness of the threaded helix being in the range 200 - 1000HB, when the nut component is received in a substantially blank form.

9. A screwthreaded fastening arrangement according to any one of claims 1 - 8, wherein the nut component (54) comprises a simple tubular item with at least two flat surfaces (flats) upon an external surface defined parallel to an axis of the tubular item.

10. A screwthreaded fastening arrangement according to claim 9, wherein there are four or six flats arranged in, respectively, a generally square or a regular hexagonal arrangement.

11. A method of providing a screwthreaded fastening between a generally circularly cylindrical shank component (51) having a first surface hardness and a nut component (54) having an inside face with a second hardness,
wherein an outside diameter of the shank corresponds with an inside diameter of the nut component;
wherein the shank component has the greater surface hardness and is provided with a screwthread (52) having a helix angle in the range of 30° - 75°, the screwthread extending outwardly with respect to a land surface of the shank component about a continuous helix, wherein the screwthread comprises one of:
a pair of parallel spaced apart helical ridges or three parallel spaced apart helical ridges;
wherein the method comprises the steps of:
engaging the screwthread with the inside surface of the nut component;
cutting a corresponding thread in the inside surface of the nut component upon relative rotational advancement thereof; generating heat at areas of thread contact; wherein upon cessation of such rotational advancement to permit cooling and fixing of the joint by welding, whereby to provide a fixing resistant to disengagement by vibration.

## Patentansprüche

1. Schraubengewinde-Befestigungsanordnung, wobei die Anordnung eine im Allgemeinen kreiszylindrische Schaftkomponente (50), die eine erste Oberflächenhärte aufweist, und eine Mutterkomponente (54), die eine im Allgemeinen kreiszylindrische Öffnung mit einer Innenfläche mit einer zweiten Härte aufweist, umfasst, wobei ein Außendurchmesser des Schafts einem Innendurchmesser der Mutterkomponente entspricht; wobei die Schaftkomponente mit einem Schraubengewinde (52), das einen Schrägungswinkel im Bereich von 30° - 75° aufweist, versehen ist, das Schraubengewinde eine Oberflächenhärte hat, die größer als die Oberflächenhärte der Mutterkomponente ist, das Schraubengewinde sich in Bezug auf die Stegfläche (56) der Schaftkomponente nach außen um eine durchgehende Schraubenlinie (55) erstreckt; wobei das Schraubengewinde imstande ist, mit der Oberfläche der Mutterkomponente in Eingriff zu kommen und wobei es bei einer relativen Rotationsbewegung und einer axialen Vorwärtsbewegung zwischen diesen imstande ist, ein entsprechendes Gewinde darin zu schneiden; **dadurch gekennzeichnet, dass** das Schraubengewinde eines von einem Paar paralleler, voneinander beabstandeter, wendelförmiger Rippen oder von drei parallelen, voneinander beabstandeten, wendelförmigen Rippen umfasst, und dass während der Anwendung bei Beendigung der Rotationsvorwärtsbewegung ein Befestigungszustand durch Verschweißen zwischen dem Schraubengewinde und dem entsprechend geschnittenen Gewinde herbeigeführt wird, wodurch eine Loslösung durch Vibration verhindert wird.

2. Schraubengewinde-Befestigungsanordnung nach Anspruch 1, wobei der Innendurchmesser der Mutterkomponente (54) im Bereich zwischen 110 % - 100 % des Durchmessers des Schafts (56) liegt und der Durchmesser des Gewindes größer als der Innendurchmesser der Mutterkomponente ist.

3. Schraubengewinde-Befestigungsanordnung nach Anspruch 1 oder 2, wobei das Gewinde von einer Arbeitsfläche (56) im Bereich von 0,5 - 10 % des Durchmessers des Schaftstegs abgehoben ist.

4. Schraubengewinde-Befestigungsanordnung nach einem der Ansprüche 1 - 3, wobei die Länge der Mutter (54) mindestens eine Windung des Spiralgewindes umfasst.

5. Schraubengewinde-Befestigungsanordnung nach einem der Ansprüche 1 - 3, wobei die Länge der Mutter (54) mindestens zwei Windungen des Spiralgewindes umfasst.

6. Schraubengewinde-Befestigungsanordnung nach einem der Ansprüche 1 - 5, wobei die Länge der Mutter (54) im Wesentlichen glatt ist, jedoch einen mit Gewinde versehenen Gewinde-Einführabschnitt umfasst, der mindestens eine Viertelwindung des Spiralgewindes umfasst.

7. Schraubengewinde-Befestigungsanordnung nach einem der Ansprüche 1 - 5, wobei die Innenwand der Mutter (54) im Wesentlichen parallel ist, jedoch einen Einführabschnitt umfasst, der mindestens eine Viertelwindung des Spiralgewindes umfasst.

8. Schraubengewinde-Befestigungsanordnung nach einem der Ansprüche 1 - 7, wobei die Härte der Innenfläche der Mutterkomponente (54) im Bereich von 10 - 200 HB und die Härte der Gewindespirale im Bereich von 200 - 1000 HB liegt, wenn die Mutterkomponente in einer im Wesentlichen blanken Ausformung aufgenommen wird.

9. Schraubengewinde-Befestigungsanordnung nach einem der Ansprüche 1 - 8, wobei die Mutterkomponente (54) ein einfaches rohrförmiges Element mit mindestens zwei flachen Oberflächen (Abflachungen) auf einer Außenfläche, die parallel zu einer Achse des rohrförmigen Elements definiert ist, umfasst.

10. Schraubengewinde-Befestigungsanordnung nach Anspruch 9, wobei vier oder sechs Abflachungen jeweils in einer im Allgemeinen quadratischen bzw. regelmäßigen sechseckigen Anordnung ausgestaltet sind.

11. Verfahren zum Bereitstellen einer Schraubengewinde-Befestigung zwischen einer im Allgemeinen kreiszylindrischen Schaftkomponente (51), die eine erste Oberflächenhärte aufweist, und einer Mutterkomponente (54), die eine Innenfläche mit einer zweiten Härte aufweist,
wobei ein Außendurchmesser des Schafts einem Innendurchmesser der Mutterkomponente entspricht;
wobei die Schaftkomponente die größere Oberflächenhärte aufweist und mit einem Schraubengewinde (52) versehen ist, das einen Schrägungswinkel im Bereich von 30° - 75° aufweist, wobei sich das Schraubengewinde in Bezug auf die Stegfläche der Schaftkomponente nach außen um eine durchgehende Schraubenlinie erstreckt, wobei das Schraubengewinde eines von einem Paar paralleler, voneinander beabstandeter, wendelförmiger Rippen oder von drei parallelen, voneinander beabstandeten, wendelförmigen Rippen umfasst;
wobei das Verfahren die folgenden Schritte umfasst:
Eingreifen des Schraubengewindes in die Innenfläche der Mutterkomponente;
Schneiden eines entsprechenden Gewindes in die Innenfläche der Mutterkomponente nach einer relativen Rotationsvorwärtsbewegung desselben; Erzeugen von Hitze an Bereichen des Gewindekontakts; wobei nach Beendigung einer solchen Rotationsvorwärtsbewegung eine Abkühlung und Fixierung der Verbindung durch Schweißen ermöglicht wird, wodurch eine gegen Loslösung durch Vibration widerstandsfähige Fixierung bereitgestellt wird.

## Revendications

1. Système de fixation par filetage, le système comprenant un élément de tige généralement cylindrique circulaire (50) présentant une première dureté de surface et un élément d'écrou (54) présentant une ouverture généralement cylindrique circulaire avec une surface intérieure présentant une seconde dureté, dans lequel un diamètre extérieur de la tige correspond à un diamètre intérieur de l'élément d'écrou ; dans lequel l'élément de tige est pourvu d'un filetage (52) présentant un angle d'hélice compris entre 30° et 75°, le filetage présentant une dureté de surface supérieure à la dureté de surface de l'élément d'écrou, le filetage s'étendant vers l'extérieur par rapport à la surface d'appui (56) de l'élément de tige autour d'une hélice continue (55) ; dans lequel le filetage est utilisable pour venir en contact avec la surface de l'élément d'écrou, et dans lequel, lors d'un mouvement de rotation relatif et d'un avancement axial entre eux, il est utilisable pour couper un filet correspondant dans celuici ; **caractérisé en ce que** le filetage comprend l'un des éléments suivants : une paire de nervures hélicoïdales parallèles espacées ou trois nervures hélicoïdales parallèles espacées et **en ce que**, lors de l'utilisation, sous l'effet de l'arrêt de l'avancement en rotation, un état de fixation par soudage est induit entre le filetage et le filet coupé correspondant, ce qui permet de résister au désaccouplement par vibration.

2. Système de fixation par filetage selon la revendication 1, dans lequel le diamètre intérieur de l'élément d'écrou (54) est compris entre 110 % et 100 % du diamètre de la tige (56), le diamètre du filet étant supérieur au diamètre intérieur de l'élément d'écrou.

3. Système de fixation par filetage selon la revendication 1 ou 2, dans lequel le filet est surélevé par rapport à une surface de travail (56) comprise entre 0,5 à 10 % du diamètre de l'extrémité de la tige.

4. Système de fixation par filetage selon l'une quelconque des revendications 1 à 3, dans lequel la longueur de l'écrou (54) comprend au moins un tour du filet hélicoïdal.

5. Système de fixation par filetage selon l'une quelconque des revendications 1 à 3, dans lequel la longueur de l'écrou (54) comprend au moins deux tours du filet hélicoïdal.

6. Système de fixation par filetage selon l'une quelconque des revendications 1 à 5, dans lequel la longueur de l'écrou (54) est pratiquement standard, mais comprend une partie filetée comprenant au moins un quart de tour du filet hélicoïdal.

7. Système de fixation par filetage selon l'une quelconque des revendications 1 à 5, dans lequel la paroi interne de l'écrou (54) est pratiquement parallèle, mais comprend une partie filetée comprenant au moins un quart de tour du filet hélicoïdal.

8. Système de fixation par filetage selon l'une quelconque des revendications 1 à 7, dans lequel la dureté de la surface intérieure de l'élément d'écrou (54) est comprise entre 10 et 200 HB et la dureté de l'hélice filetée est comprise entre 200 et 1 000 HB, lorsque l'élément d'écrou est reçu sous une forme pratiquement vierge.

9. Système de fixation par filetage selon l'une quelconque des revendications 1 à 8, dans lequel l'élément d'écrou (54) comprend un simple article tubulaire avec au moins deux surfaces planes (méplats) sur une surface extérieure définie parallèlement à un axe de l'article tubulaire.

10. Système de fixation par filetage selon la revendication 9, dans lequel il existe quatre ou six méplats agencés, respectivement, selon une disposition généralement carrée ou hexagonale régulière.

11. Procédé de fourniture d'une fixation par filetage entre un élément de tige (51) généralement cylindrique circulaire présentant une première dureté de surface et un élément d'écrou (54) présentant une face interne présentant une seconde dureté,
dans lequel le diamètre extérieur de la tige correspond au diamètre intérieur de l'élément d'écrou ;
dans lequel l'élément de tige présente la plus grande dureté de surface et est pourvu d'un filetage (52) présentant un angle d'hélice compris entre 30° et 75°, le filetage s'étendant vers l'extérieur par rapport à une surface de contact de l'élément de tige autour d'une hélice continue, dans lequel le filetage comprend l'un des éléments suivants : une paire de nervures hélicoïdales parallèles espacées ou trois nervures hélicoïdales parallèles espacées ;
dans lequel le procédé comprend les étapes suivantes :
l'entrée en contact du filetage avec la surface interne de l'élément d'écrou ;
la coupe d'un filet correspondant dans la surface interne de l'élément d'écrou lors de son avancement relatif par rotation ; la génération de chaleur dans les zones de contact avec le filet ; dans lequel l'arrêt de cet avancement par rotation pour permettre le refroidissement et la fixation du joint par soudage, ce qui permet de fournir une fixation résistante au désaccouplement par vibration.
